# EUROPEAN PATENT APPLICATION

(11) **EP 4 769 671 A1**
(43) Date of publication of application: **01.07.2026**
(21) Application number: 24898294.4
(22) Date of filing: 13.11.2024
(51) Int. Cl.: H01M 10/658, H01M 50/516, H01M 50/503, H01M 50/517, H01M 50/507, H01M 50/521, H01M 50/526, H01M 50/249

(54) **BATTERY PACK AND DEVICE INCLUDING SAME**

(30) Priority: 29.11.2023 KR 20230169615
(71) Applicant: LG ENERGY SOLUTION, LTD., Seoul 07335 (KR)
(72) Inventor: Rhim, Soeun, Daejeon 34122 (KR); Min, Jinki, Daejeon 34122 (KR)
(74) Representative: Hoffmann Eitle
(86) International application number: PCT/KR2024/096548
(87) International publication number: WO 2025/116702

(57) **Abstract**

A battery pack according to an embodiment includes a plurality of battery modules, a busbar partition wall disposed between adjacent battery modules among the plurality of battery modules, wherein the busbar partition wall includes a busbar portion electrically connecting terminal busbars in each of the adjacent battery modules, and a pair of partition wall portions coupled to the busbar portion and disposed between side surfaces of the adjacent battery modules.

## Description

### [Technical Field]

### CROSS-REFERENCE TO RELATED APPLICATION

This application claims priority to and the benefit of Korean Patent Application No. 10-2023-0169615 filed at the Korean Intellectual Property Office on November 29, 2023, the entire contents of which are incorporated herein by reference.

The present disclosure relates to a battery pack and a device including the same, and more particularly, to a battery pack and a device including the same which improve assembling properties while delaying heat transfer time to an adjacent module.

### [Background Art]

In modern society, as portable devices such as mobile phones, laptops, camcorders, and digital cameras are in daily use, the development of technologies in the fields related to mobile devices as described above has been activated. In addition, chargeable and dischargeable rechargeable batteries are used as a power source for electric vehicles (EV), hybrid electric vehicles (HEV), plug-in hybrid electric vehicles (P-HEV), and the like, in an attempt to solve air pollution caused by existing gasoline vehicles using fossil fuel, and there is a growing need for development of rechargeable batteries.

Currently, commercially available rechargeable batteries include nickel cadmium batteries, nickel hydrogen batteries, nickel zinc batteries, lithium rechargeable batteries, and the like. Among these batteries, in comparison with nickel-based rechargeable batteries, lithium rechargeable batteries cause almost no memory effect and thus are freely charged or discharged. Further, lithium rechargeable batteries have a very low self-discharge rate and a high energy density, and due to these advantages, lithium rechargeable batteries have come into the spotlight.

Such a lithium rechargeable battery mainly uses a lithium-based oxide and a carbonaceous material as a positive electrode active material and a negative electrode active material, respectively. The lithium rechargeable battery includes an electrode assembly in which a positive electrode plate and a negative electrode plate each coated with a positive active material and a negative active material are disposed with a separator being interposed therebetween, and a battery case that seals and houses the electrode assembly together with an electrolyte.

Generally, the lithium rechargeable battery may be classified based on the shape of the exterior material into a can-type rechargeable battery in which the electrode assembly is mounted in a metal can, and a pouch-type rechargeable battery in which the electrode assembly is mounted in a pouch made of an aluminum laminate sheet.

In the case of a rechargeable battery used for small-sized devices, two to three battery cells are disposed, but in the case of a rechargeable battery used for a middle- or large-sized device such as an automobile, a battery module in which a large number of battery cells are electrically connected is used. In such a battery module, a large number of battery cells are connected to each other in series or in parallel to form a battery cell stack, thereby improving capacity and output. In addition, one or more battery modules may be mounted together with various control and protection systems such as battery management system (BMS) and a cooling system to form a battery pack.

In a battery pack, which is a collection of a plurality of battery modules, heat generated from the plurality of battery cells may add up in a narrow space, causing the temperature to rise quickly and excessively. In other words, in the case of battery modules in which a plurality of battery cells are stacked and battery packs are equipped with such battery modules, high output can be obtained, but if the heat dissipation of the battery cells is not properly performed or a thermal runaway phenomenon of the battery cells occurs, there is a high possibility of continuous ignition or subsequent explosion.

Accordingly, there is a need for a battery pack configuration that can delay propagation of heat to adjacent battery modules as much as possible even if a thermal runaway phenomenon occurs in one battery cell or module, and development of a technology that does not increase the difficulty or cost of assembly even if components are added to delay the heat propagation.

### [Disclosure]

### [Technical Problem]

The present disclosure attempts to provide a battery pack and a device including the same capable of delaying the transition of an adjacent battery module even if an ignition phenomenon occurs within a battery module, while being easy to assemble and reducing cost.

The objects of the present disclosure are not limited to the aforementioned objects, and other objects which are not described herein should be clearly understood by those skilled in the art from the following detailed description and the accompanying drawings.

### [Technical Solution]

A battery pack according to an embodiment includes a plurality of battery modules, and a busbar partition wall disposed between adjacent battery modules among the plurality of battery modules, wherein the busbar partition wall includes a busbar portion electrically connecting terminal busbars provided in each of the adjacent battery modules, and a pair of partition wall portions coupled to the busbar portion and disposed between side surfaces of the adjacent battery modules.

The battery pack may include an insulating portion interposed between the pair of partition wall portions.

The busbar partition wall and the insulating portion may be configured to be separable.

The insulating portion may include mica or foamed silicone.

The pair of partition wall portions may have a flat plate shape parallel to the side surfaces of the adjacent battery modules.

The busbar portion may have a bar shape extending in a direction perpendicular to the side surface of the adjacent battery module.

The busbar portion may include two through holes formed at both ends of the bar shape.

The pair of partition wall portions may be disposed between the two through holes.

The busbar portion may be integrally connected to the pair of partition wall portions by welding.

The pair of partition wall portions may include aluminum (Al).

The busbar portion may include a recessed portion corresponding to the pair of partition wall portions, and the recessed portion may be slidably coupled to an upper portion of the pair of partition wall portions.

The busbar portion may include a coupling hole at a position in contact with the pair of partition wall portions, the pair of partition wall portions may include a coupling groove at a position corresponding to the coupling hole, and the busbar portion and the pair of partition wall portions may be coupled by a fastening member penetrating the coupling hole and the coupling groove.

A device according to another embodiment of the present disclosure includes the battery pack as described above.

### [Advantageous Effects]

According to embodiments, in a battery pack, even if an ignition phenomenon occurs in some battery modules, it is possible to delay the transition of adjacent battery modules while improving the ease of assembly of the battery pack and reducing the cost.

The effects of the present disclosure are not limited to the those described above and those not described above would be clearly understood by those skilled in the art from the detailed description and the accompanying drawings.

### [Description of the Drawings]

FIG. 1 is a perspective view schematically illustrating the configuration of a battery pack according to an embodiment of the present disclosure.
FIG. 2 is a perspective view of some of the battery modules included in the battery pack of FIG. 1.
FIG. 3 is a partial perspective view illustrating the battery module of FIG. 2 with a module frame and an end plate removed.
FIG. 4 is an enlarged top plan view of a busbar portion of a busbar partition wall of FIG. 2.
FIG. 5 is a perspective view of the busbar partition wall and an insulating portion of FIG. 2.
FIG. 6 is a perspective view of the busbar partition wall and the insulating portion in the battery pack according to another embodiment of the present disclosure.
FIG. 7 is a perspective view of the busbar portion included in the busbar partition wall of FIG. 6.
FIG. 8 is a perspective view of the busbar partition wall and the insulating portion in the battery pack according to another embodiment of the present disclosure.

### [Mode for Invention]

Hereinafter, the present disclosure will be described in detail with reference to the accompanying drawings, in which embodiments of the present disclosure are shown. As those skilled in the art would realize, the described embodiments may be modified in various different ways, all without departing from the spirit or scope of the present disclosure.

The drawings and description are to be regarded as illustrative in nature and not restrictive, and like reference numerals designate like elements throughout the specification.

Further, since sizes and thicknesses of components shown in the accompanying drawings may be arbitrarily given to facilitate understanding and ease of description, the disclosure is not limited to the illustrated sizes and thicknesses. In the drawings, the thickness of layers and regions are exaggerated for clarity. In the drawings, to facilitate understanding and ease of description, the thicknesses of some layers and regions may be exaggerated.

In addition, unless explicitly stated to the contrary, the word "comprise," and variations such as "comprises" and "comprising," should be understood to imply the inclusion of stated elements but not the exclusion of any other elements.

In addition, the phrase "on a plane" means a view from a position above the object (e.g., from the top), and the phrase "in a cross-section" means a view of a cross-section of the object which is vertically cut from the side.

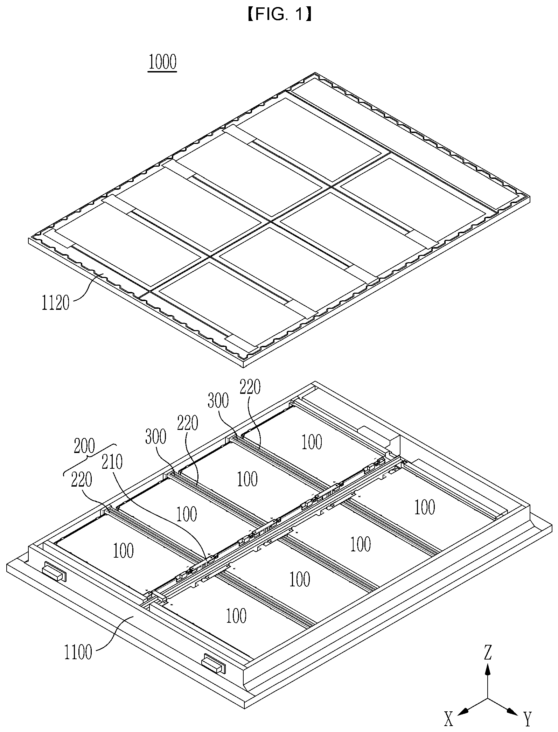

Hereinafter, a battery module according to an embodiment of the present disclosure will be described with reference to FIGS. 1 to 5.

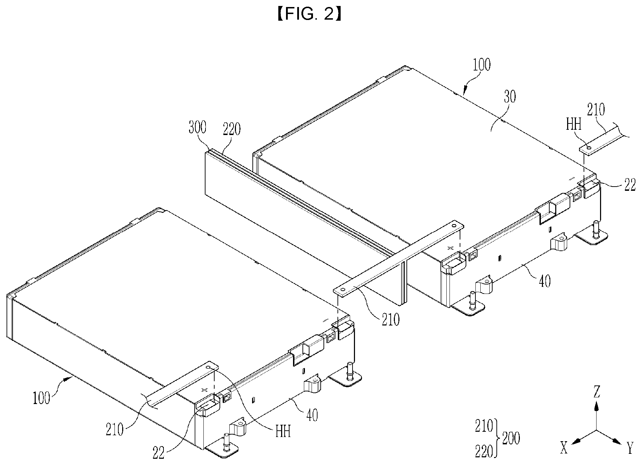

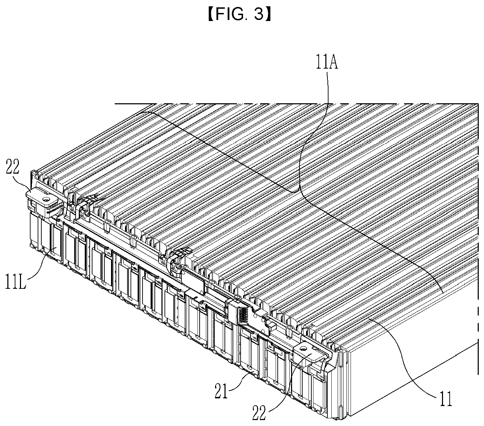

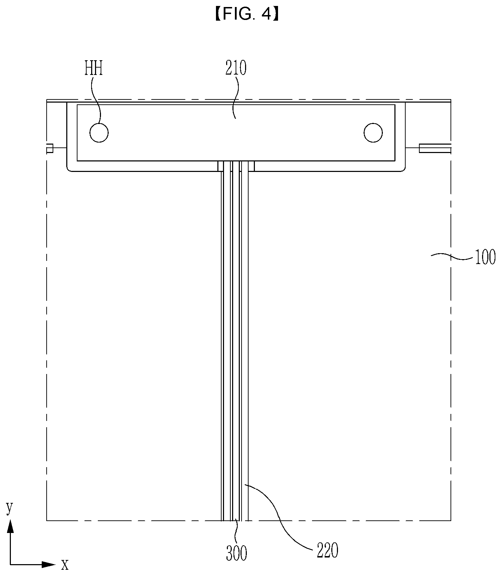

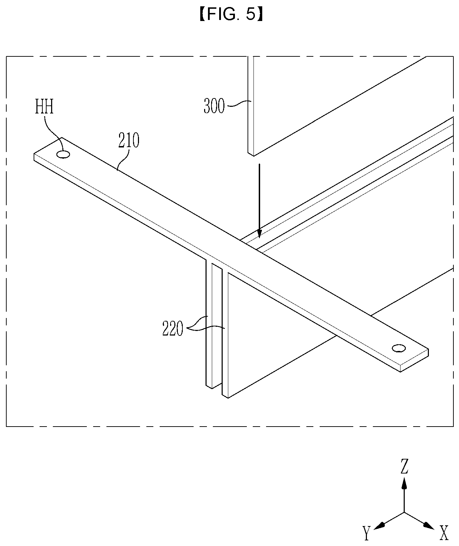

FIG. 1 is a perspective view schematically illustrating the configuration of a battery pack according to an embodiment of the present disclosure, FIG. 2 is a perspective view of some of the battery modules included in the battery pack of FIG. 1, FIG. 3 is a partial perspective view illustrating the battery module of FIG. 2 with a module frame and an end plate removed, FIG. 4 is an enlarged top plan view of portion A of FIG. 1, and FIG. 5 is a perspective view of the busbar partition wall and an insulating portion of FIG. 2.

First, referring to FIG. 1, a battery pack 1000 according to an embodiment includes a plurality of battery modules 100, and a busbar partition wall 200 disposed between adjacent battery modules 100 among the plurality of battery modules 100. The plurality of battery modules 100 may be stored in a pack frame 1100. In this case, the plurality of battery modules 100 may be mounted together with various control and protection systems such as a battery disconnect unit (BDU), a battery management system (BMS), and a cooling system to form a battery pack. Electrical connection between the battery modules 100 or electrical connection between the battery modules 100 and the BDU module may be made by busbars, and in the present embodiment, connection may be made by a busbar portion 210 included in the busbar partition wall 200.

The pack frame 1100 may include a lower frame 1110 having an empty space formed therein and configured to store the plurality of battery modules 100 and various control and protection systems in the empty space, and an upper frame 1120 coupled to the upper portion of the lower frame 1110 to protect electrical components stored in the pack frame 1100. For example, as shown in FIG. 1, the lower frame 1110 may be configured in a box shape with an open upper portion, and the upper frame 1120 may be configured in a flat shape that covers an upper open end of the lower frame 1110, but is not limited thereto, and the pack frame 1100 may be configured in various shapes.

Hereinafter, the battery module 100 according to the present embodiment will be described with reference to FIGS. 2 and 3. However, the battery module 100 described below is an exemplary structure of the battery module including a plurality of battery cells 11, and various shapes of battery modules including the plurality of battery cells may be applied.

Referring to FIGS. 2 and 3, the battery module 100 according to the present embodiment may include a battery cell laminate 11A in which the plurality of battery cells 11 are laminated. The battery cell stack 11A is illustrated in FIG. 3. Such a battery cell stack 11A may be stored in a module frame 30 and an end plate 40.

The battery cell 11 may be a pouch-type battery cell. Such a pouch-type battery cell may be formed by storing an electrode assembly in a pouch case made of a laminate sheet including a resin layer and a metal layer, and then fusing the outer periphery of the pouch case. Such a battery cell 11 may be formed into a rectangular sheet structure. An electrode lead 11L connected to the electrode assembly protrudes outside the pouch case, and electrode leads 11L of each battery cell 11 may be electrically connected to each other via a lead busbar 21. On the other hand, at least one electrode lead 11L may be connected to a terminal busbar 22. A portion of the terminal busbar 22 may be exposed to the outside of the battery module 100 as shown in FIG. 2. Both the lead busbar 21 and the terminal busbar 22 may include a metal material having excellent electrical conductivity.

The busbar portion 210 of the busbar partition wall 200 according to the present embodiment is electrically connected to the terminal busbar 22 so that a high-voltage (HV) connection may be made. Here, the HV connection means a connection that serves as a power source for supplying electric power, and for example, the battery module 100 may be electrically connected to another battery module 100 via a busbar portion 210 connected to the terminal busbar 22. Additionally, although not shown, a separate busbar may be further included to electrically connect the BDU module or BMS module, rather than between adjacent battery modules 100.

Hereinafter, the busbar partition wall 200 having the busbar portion 210 and an insulating portion 300 equipped therewith will be described in more detail with reference to FIGS. 4 and 5.

The busbar partition wall 200 includes the busbar portion 210 that electrically connects the terminal busbars 22 provided in each of the adjacent battery modules 100, and a pair of partition wall portions 220 that are coupled to the busbar portion 210 and disposed between the side surfaces of the adjacent battery modules 100. In addition, the pair of partition wall portions 220 are spaced apart from each other, and the insulating portion 300 is disposed between the partition wall portions 220.

The busbar portion 210 is a configuration for guiding electrical connection between adjacent battery modules 100, and may include a metal material with excellent electrical conductivity. The busbar portion 210 may have a bar shape extending in one direction. As shown in FIG. 4, for example, the busbar portion 210 is illustrated as having a bar shape extending in the X-axis direction. Each of the ends on both sides of the busbar portion 210-the ends in the X-axis direction -are disposed to contact the terminal busbars 22 of the adjacent battery modules 100. At the end, a through hole HH is formed. A fastening member (not shown) such as a bolt may be inserted into the through hole HH to achieve an electrical connection with the terminal busbar 22.

On the lower surface of the busbar portion 210, the pair of partition wall portions 220 are coupled. That is, the pair of partition wall portions 220 are formed by two plate-shaped partition wall portions 220 facing each other with a gap therebetween, and these configurations may be formed by coupling with the lower surface of the busbar portion 210 at the upper end (upper portion in the Z-axis direction) of the end (end in the Y-axis direction). The partition wall portion 220 may be formed in a surface shape parallel to the widest surface of the battery cell 11 included in the battery module 100. That is, the partition wall portion 220 may be configured in a form that is erected to face the side surface of the battery modules 100 arranged adjacently in the X-axis direction, and each of the pair of partition wall portions 220 may be arranged to face each of the adjacent battery modules 100. Accordingly, the partition wall portion 220 may be arranged to separate the adjacent battery modules 100. In addition, the partition wall portion 220 is arranged between the adjacent battery modules 100, and may be arranged between the through holes HH formed at each end on both sides (end in the X-axis direction) of the busbar portion 210 based on the busbar portion 210.

The partition wall portions 220 may be configured with a shape and material capable of blocking or reducing the transfer of heat and/or flame between the battery modules 100. For example, the partition wall portion 220 may include aluminum. In addition, the partition wall portion 220 may be formed of the same material as the busbar portion 210 or may be formed of different materials, and is not particularly limited.

On the other hand, referring to FIG. 5, the pair of partition wall portions 220 may be spaced apart to form a space therebetween, and the insulating portion 300 may be inserted and disposed in the space. A flame-retardant material with high heat resistance may be used as the insulating portion 300, and for example, mica or foamed silicone may be used. The insulating portion 300 may be affixed by providing a stopper at the upper portion or lower portion of the partition wall portion 220 for fixation while the insulating portion 300 is inserted, or by allowing the thickness of the insulating portion 300 to be fitted into the space between the partition wall portions 220, but is not particularly limited thereto.

The pair of partition wall portions 220 may be formed in a coupled state by being attached to the lower surface of the busbar portion 210 as described above, thereby forming the busbar partition wall 200. Such an attachment may allow the pair of partition wall portions 220 and the busbar portion 210 to be integrally formed by welding, but is not particularly limited thereto and various configurations may be applied. By forming the partition wall portion 220 and the busbar portion 210 in a coupled state, the number of parts may be reduced and the assembly process may be shortened.

In addition, a configuration may be easily assembled to block heat transfer between the battery modules 100 by inserting the insulating portion 300 between the partition wall portions 220 of the busbar partition wall 200. That is, in the past, separate insulating portion had to be attached to the outside of the partition wall to prevent heat transfer, and a busbar separate from this configuration had to be provided. In this case, the insulating portion attached to the outside of the partition wall was continuously falling off during an assembly process, requiring replacement with a new part. In addition, there was also the problem that the assembly process was complicated because the busbar and the partition wall were separate structures that had to be aligned and assembled separately.

However, according to the present embodiment, since the busbar portion 210 and the partition wall portion 220 are formed in a coupled state, the partition wall portion 220 may be aligned simultaneously with the alignment of the busbar portion 210 for electrical connection, thereby shortening the assembly process. Further, since the insulating portion 300 is disposed between the partition wall portions 220 rather than attached to the outside of the partition wall, the insulating portion 300 may be prevented from being damaged or falling off during the assembly process, thereby reducing costs. In addition, even if the partition wall portion 220 melts in a heat transfer test, etc., heat transfer to the adjacent battery module 100 may be delayed by the insulating portion 300.

On the other hand, the insulating portion 300 may not be in a configuration that is integrally formed with the busbar partition wall 200, but rather in a configuration that may be separated and replaced. For this reason, if either the insulating portion 300 or the busbar partition wall 200 is damaged, only the damaged portion may be separated and replaced for reuse, thereby achieving cost reduction.

As described above, in the battery pack 1000 according to an embodiment of the present disclosure, since the busbar partition wall 200 is disposed between the adjacent battery modules 100, even if a thermal runaway phenomenon occurs in one battery module, it is possible to delay the transition to adjacent modules while improving the ease of assembly and achieving cost reduction. In other words, by forming the busbar portion 210 and the partition wall portion 220 in a coupled state, the number of parts may be reduced and the ease of assembly may be improved. In addition, by arranging the insulating portion 300 between the partition wall portions 220, it is possible to prevent damage to the insulating portion during the assembly process, and even if the partition wall portions 220 are damaged by thermal runaway, heat transfer may be prevented or delayed by the insulating portion 300.

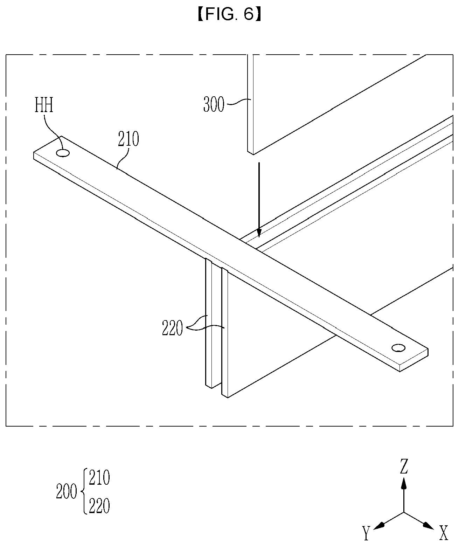

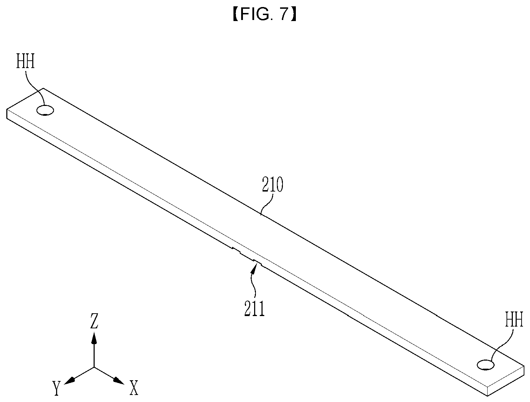

Hereinafter, the battery pack according to another embodiment of the present disclosure will be described with reference to FIGS. 6 and 7.

FIG. 6 is a perspective view of the busbar partition wall and the insulating portion in the battery pack according to another embodiment of the present disclosure, and FIG. 7 is a perspective view of the busbar portion included in the busbar partition wall of FIG. 6.

As shown in FIG. 6, in the case of the busbar partition wall 200 included in the battery pack according to another embodiment of the present disclosure, there is a difference from the previous embodiment in that the busbar portion 210 and the pair of partition wall portions 220 are slidably coupled rather than welded. To this end, as shown in FIG. 7, the lower surface of the busbar portion 210 includes a recessed portion 211 formed at a position corresponding to the pair of partition wall portions 220. In this recessed portion 211, as shown in FIG. 6, the upper surface of the partition wall portion 220 is slidably coupled so that the busbar portion 210 and the pair of partition wall portions 220 may be coupled to complete the busbar partition wall 200. According to the above-described configuration, the busbar portion 210 and the pair of partition wall portions 220 may be formed into a single part by coupling while being separated so that the advantages of being formed by coupling (ease of assembly and process, cost reduction) may be enjoyed, while the ease of coupling between the busbar portion 210 and the pair of partition wall portions 220 may also be improved.

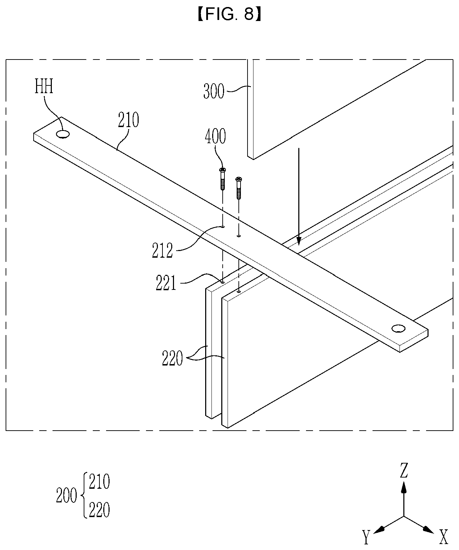

Hereinafter, the battery pack according to another embodiment of the present disclosure will be described with reference to FIG. 8.

FIG. 8 is a perspective view of the busbar partition wall and the insulating portion in the battery pack according to another embodiment of the present disclosure.

As shown in FIG. 8, in the case of the busbar partition wall 200 included in the battery pack according to another embodiment of the present disclosure, the busbar portion 210 and the pair of partition wall portions 220 are coupled by a fastening member rather than welding, which is different from the previous embodiments. To this end, as shown in FIG. 8, the busbar portion 210 includes coupling holes 212 that is formed at a position corresponding to the pair of partition wall portions 220 and penetrating the busbar portion 210. In response to the coupling holes 212, coupling grooves 221 are formed in the pair of partition wall portions 220. After their positions are aligned, a fastening member 400 is inserted through the coupling holes 212 and the coupling grooves 221, thereby combining the busbar portion 210 and the pair of partition wall portions 220 to complete the busbar partition wall 200. According to the-above described configuration, the busbar portion 210 and the pair of partition wall portions 220 may be formed into a single part by coupling while being separated, so that the advantages of being formed by coupling (ease of assembly and process, cost reduction) may be enjoyed, while the ease of coupling between the busbar portion 210 and the pair of partition wall portions 220 may also be improved.

The battery pack may be applied to various devices. Specifically, the battery pack may be applied to transportation means such as an electric bicycle, an electric vehicle, and a hybrid vehicle, but is not limited thereto, and may be applied to various devices which may use rechargeable batteries.

The terms representing directions such as the front side, the rear side, the left side, the right side, the upper side, and the lower side have been used in embodiments of the present disclosure, but the terms used are provided simply for convenience of description and may become different according to the position of an object, the position of an observer, or the like.

While this disclosure has been described in connection with what is presently considered to be practical embodiments, it should be understood that the disclosure is not limited to the disclosed embodiments, but, on the contrary, is intended to cover various modifications and equivalent arrangements included within the spirit and scope of the appended claims.

### <Description of symbols>

1000: Battery pack
100: Battery module
200: Busbar partition wall
210: Busbar portion
220: Partition wall portion
300: Insulating portion

## Claims

1. A battery pack, comprising:
a plurality of battery modules; and
a busbar partition wall disposed between adjacent battery modules among the plurality of battery modules,
wherein the busbar partition wall comprises:
a busbar portion electrically connecting terminal busbars in each of the adjacent battery modules; and
a pair of partition wall portions coupled to the busbar portion and disposed between side surfaces of the adjacent battery modules.

2. The battery pack of claim 1, further comprising:
an insulating portion between the pair of partition wall portions.

3. The battery pack of claim 2, wherein the busbar partition wall and the insulating portion are configured to be separable.

4. The battery pack of claim 2, wherein the insulating portion comprises mica or foamed silicone.

5. The battery pack of claim 1, wherein the pair of partition wall portions have a flat plate shape parallel to the side surfaces of the adjacent battery modules.

6. The battery pack of claim 5, wherein the busbar portion has a bar shape extending in a direction perpendicular to the side surface of the adjacent battery module.

7. The battery pack of claim 6, wherein:
the busbar portion comprises two through holes formed at both ends of the bar shape, and
the pair of partition wall portions are disposed between the two through holes.

8. The battery pack of claim 1, wherein the busbar portion is integrally connected to the pair of partition wall portions by welding.

9. The battery pack of claim 1, wherein the pair of partition wall portions comprise aluminum (Al).

10. The battery pack of claim 1, wherein:
the busbar portion comprises a recessed portion corresponding to the pair of partition wall portions, and
the recessed portion is slidably coupled to an upper portion of the pair of partition wall portions.

11. The battery pack of claim 1, wherein:
the busbar portion comprises a coupling hole at a position in contact with the pair of partition wall portions,
the pair of partition wall portions comprise a coupling groove at a position corresponding to the coupling hole, and
the busbar portion and the pair of partition wall portions are coupled by a fastening member penetrating the coupling hole and the coupling groove.

12. A device, comprising:
the battery pack according to claim 1.
